# EUROPÄISCHE PATENTSCHRIFT

(11) **EP 1 688 005 B1**
(45) Veröffentlichungstag und Bekanntmachung des Hinweises auf die Patenterteilung: **14.01.2009**
(21) Anmeldenummer: 04797746.7
(22) Anmeldetag: 09.11.2004
(51) Int. Cl.: H04W 88/10

(54) **MOBILES KOMMUNIKATIONSENDGERÄT FÜR DIENSTART-SIGNALISIERUNG**
MOBILE COMMUNICATION TERMINAL FOR SERVICE TYPE SIGNALLING
TERMINAL DE COMMUNICATION MOBILE CONNU POUR SIGNALER LE TYPE DE SERVICE

(30) Priorität: 25.11.2003 DE 10354942
(43) Veröffentlichungstag der Anmeldung: 09.08.2006
(73) Patentinhaber: SIEMENS AKTIENGESELLSCHAFT, 80333 München (DE)
(72) Erfinder: BRAAM, Reinhold, 46414 Rhede (DE); FRANZEN, Michael, 46395 Bocholt (DE); GRÖTING, Wolfgang, 46149 Oberhausen (DE); SCHMIDT, Malte, 46397 Bocholt (DE); LORENZ, Gesa, 46535 Dinslaken (DE); OBERMANNS, Sebastian, 46397 Bocholt (DE)
(86) Internationale Anmeldenummer: PCT/EP2004/012672
(87) Internationale Veröffentlichungsnummer: WO 2005/060289

(56) Entgegenhaltungen:
- EP-A- 0 781 064
- WO-A-01/89249
- US-A- 5 613 213
- US-B1- 6 603 755

## Beschreibung

Die Erfindung bezieht sich auf ein mobiles Kommunikationsendgerät zum Betrieb für mindestens zwei Mobilfunk-Kommunikationssysteme in jeweils zugehörigen Mobilfunknetzen, deren jedes für einen Benutzer des Kommunikationsendgerätes eine Anzahl Dienste verschiedener Art bereitstellt.

Solche Kommunikationsendgeräte sind in der Regel sog. Multistandard-Geräte, die dazu in der Lage sind, wenigstens zwei Mobilfunk-Kommunikationsstandards zu unterstützen. Dabei ist üblicher Weise jedem Kommunikationsstandard ein zugehöriges Mobilfunknetz zugeordnet. Innerhalb dieser Mobilfunknetze stehen beispielsweise Dienst-Server zur Verfügung, die das Anbieten eines Dienstes für den Benutzer des Kommunikationsendgerätes unterstützen.

So ist es beispielsweise möglich, dass ein- und dasselbe mobile Kommunikationsendgerät in mehreren Mobilfunk-Netzwerken wie auch beispielsweise in einem WLAN-System betrieben wird. Jedes dieser Netzwerke bietet eine Anzahl Dienste an, die sich von ihrer Art her teilweise überlappen können. Derzeit muss der Benutzer des Kommunikationsendgerätes zunächst das Mobilfunknetz bzw. Mobilfunk-System auswählen und dann unter den dort angebotenen Diensten auswählen.

Dies hat den Nachteil, dass der Benutzer über die Dienste, die ihm seitens der verschiedenen Mobilfunk-Netzwerke und Systeme angeboten werden, kaum einen Überblick gewinnen kann.

Aus US 5,613,213 A ist ein mobiles Kommunikationsendgerät bekannt, bei dem für eine Mehrzahl von Mobilfunk-Netzwerken jeweils in Form einer Liste die dort angebotenen Dienste erfasst werden. Zum Erfassen von Diensten, die von einem bestimmten Mobilfunknetzwerk bereitgestellt werden, wird nach einem Informationskanal innerhalb des Mobilfunknetzwerks gesucht, der aufeinander folgend die zur Verfügung gestellten Dienste angibt.

In der EP 0 781 064 A2 ist ein mobiles Kommunikationsendgerät offenbart, bei dem Dienste, die von mehreren Mobilfunknetzwerken angeboten werden, nach ihrer Art anzeigbar sind. Für einen Benutzer des mobilen Kommunikationsendgerätes besteht die Möglichkeit, eine angezeigte Dienstart auszuwählen, wonach er eine Auswahl unter Mobilfunknetzwerken treffen kann, die sämtlich diese Dienstart anbieten. Informationen über von einem Mobilfunknetzwerk angebotene Dienste werden über einen Informationskanal an das mobile Kommunikationsendgerät übermittelt.

Die der Erfindung zugrundeliegende Aufgabe besteht darin, ein mobiles Kommunikationsendgerät und eine Mobilfunk-Anordnung zu schaffen, die es dem Benutzer des Kommunikationsendgerätes ermöglicht, ihm angebotene Dienste effizient zu verwalten.

Die Aufgabe wird gelöst durch ein mobiles Kommunikationsendgerät mit den Merkmalen des Anspruchs 1 bzw. eine Mobilfunk-Anordnung mit den Merkmalen des Anspruchs 6.

Danach ist ein mobiles Kommunikationsendgerät zum Betrieb für mindestens zwei Mobilfunk-Kommunikationssysteme in jeweils zugehörigen Mobilfunknetzen vorgesehen, deren jedes für einen Benutzer des Kommunikationsendgerätes eine Anzahl Dienste verschiedener Art bereitstellt, wobei das Kommunikationsendgerät zum Empfangen und Weiterverarbeiten von Datensätzen ausgebildet ist, die jeweils einer Art der Dienste zugeordnet und die für die mindestens zwei Mobilfunk-Kommunikationssysteme einheitlich sind, das Kommunikationsendgerät derart ausgebildet ist, dass von den Mobilfunknetzen mehrmals bereitgestellte Dienste derselben Art jeweils anhand der Datensätze in dem Kommunikationsendgerät in Form einer Dienstart-Liste gespeichert werden, wobei die Datensätze Informationen enthalten, die eine Bewertung der zugehörigen Dienste durch einen Benutzer gestatten.

Eine bessere Übersicht über die Dienste, die dem Benutzer des Kommunikationsendgerätes von verschiedenen Mobilfunk-Netzen bzw. -Systemen angeboten werden, ergibt sich daraus, dass das Kommunikationsendgerät Datensätze empfangen und weiterverarbeiten kann, die als Identifikationsinformationen über eine jeweilige Dienstart aufzufassen sind. Dem liegt zugrunde, dass es unabhängig davon, wie vielfältig angebotenel Dienste sind, in jedem Fall möglich sein wird, diese Dienste in verschiedene Arten zu unterteilen, wobei jeder Art ein Datensatz zugehörig ist, der, für das Kommunikationsendgerät auswertbar, die Art des Dienstes wiedergibt.

Es ist denkbar, dass die Benutzung solcher Datensätze mobilfunkstandardübergreifend standardisiert wird, so dass ein- und derselbe Datensatz unabhängig vom jeweils benutzten Mobilfunknetz oder -System, immer dieselbe Dienstart angibt. Ein solcher standardisierter Datensatz könnte beispielsweise auf vorhandene Standards aufbauen, beispielsweise auf dem XML-Standard.

Bevorzugt ist das Kommunikationsendgerät derart ausgebildet, dass es von den Mobilfunknetzen mehrmals bereitgestellte Dienste derselben Art jeweils anhand der Datensätze in dem Kommunikationsendgerät in Form einer Dienstart-Liste speichert. Bei dieser Ausführungsform werden die Datensätze, die jeweils einer Dienstart zugeordnet sind, dazu benutzt, innerhalb des Kommunikationsendgerätes gleichartige Dienste in Form einer Liste zusammenzufassen, aus der ausgewählt werden kann. Selbstverständlich ist es möglich, für eine Mehrzahl Dienstarten eine entsprechende Anzahl von Listen vorzusehen, die dann sämtlich in dem Kommunikationsendgerät gespeichert sind.

Bevorzugt weisen Einträge in der Dienstart-Liste untereinander eine unterschiedliche Priorität auf. Diese bedeutet, das für Dienste derselben Art im Kommunikationsendgerät eine Rangfolge niedergelegt ist. Die Priorität kann aufgrund eines Bewertungskriteriums definiert sein. Ein solches Bewertungskriterium ist beispielsweise eine Qualität einer Kommunikationsverbindung zu dem Mobilfunknetz, das den Dienst anbietet, zu veranschlagende Kosten für die Inanspruchnahme eines Dienstes o. ä.. Das Bewertungskriterium kann bevorzugt benutzerdefiniert sein. Auf diese Weise hat der Benutzer des Kommunikationsendgerätes den größtmöglichen Einfluss auf den jeweils innerhalb einer Dienstart priorisierten Dienst.

Um für den Benutzer des Kommunikationsendgerätes die Auswahl eines gerade gewünschten Dienstes einer speziellen Dienstart besonders einfach zu gestalten, kann das Kommunikationsendgerät derart ausgebildet sein, dass die der Dienstart zugehörige Liste auf einer Anzeigeeinrichtung des Kommunikationsendgerätes darstellbar ist sowie Auswahlmittel, die zur Auswahl eines Dienstes einer gewünschten Dienstart aus der Liste dienen, vorgesehen sind.

Die oben genannte Aufgabe wird hinsichtlich der Mobilfunk-Anordnung gelöst durch eine Mobilfunk-Anordnung mit mindestens zwei Mobilfunknetzen, denen jeweils ein Mobilfunk-Kommunikationsstandard zugeordnet ist, und mit mindestens einem mobilen Kommunikationsendgerät, das zum Betrieb für die mindestens zwei Mobilfunknetze ausgebildet ist, wobei jedes Mobilfunknetz für einen Benutzer des Kommunikationsendgerätes eine Anzahl Dienste verschiedener Art bereit stellt, wobei die mindestens zwei Mobilfunknetze zum Aussenden von Datensätzen ausgebildet sind, die jeweils einer Art der Dienste zugeordnet, für die mindestens zwei Mobilfunknetze einheitlich sind und Informationen enthalten, die eine Bewertung der zugehörigen Dienste durch einen Benutzer gestatten, und das Kommunikationsendgerät zum Empfangen und Weiterverarbeiten der Datensätze ausgebildet ist.

Ein besonderes Merkmal dieser Mobilfunk-Anordnung ist es, dass selbst unterschiedliche Mobilfunknetze oder -Systeme dieselben Datensätze verwenden, um eine bestimmte Dienstart zu identifizieren. Diese Datensätze können, wie oben bereits angedeutet, von dem Kommunikationsendgerät derart weiterverarbeitet werden, dass eine Ordnung angebotener Dienste nach Dienstart ermöglicht wird.

Die Datensätze enthalten Informationen, die eine Bewertung der zugehörigen Dienste durch den Benutzer gestatten. Solche Informationen können beispielsweise zu erwartenden Kosten oder aber Qualitätsmerkmale des Dienstes sein. So kann ein einer Dienstart zugehöriger Datensatz eine Versionsinformation über den zur Verfügung gestellten Dienst enthalten.

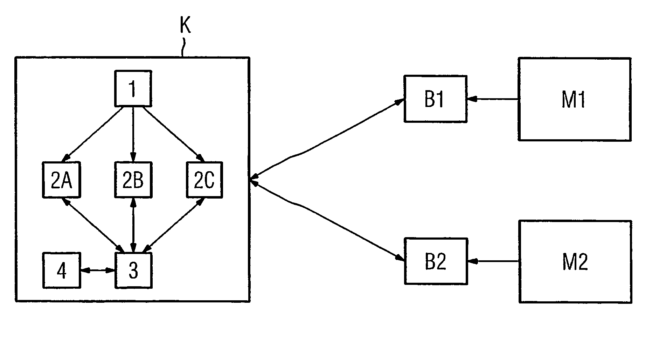

Ein Ausführungsbeispiel der Erfindung wird nachfolgend anhand der Zeichnung noch näher erläutert, die ein schematisches Blockschaltbild einer Mobilfunk-Anordnung zeigt.

Die dargestellte Mobilfunk-Anordnung weist ein beispielhaftes Kommunikationsendgerät K auf, das in zwei Mobilfunknetzen betreibbar ist und dazu mit einem ersten Mobilfunknetz M1 und einem zweiten Mobilfunknetz M2 über jeweilige Basisstationen B1 und B2 in Verbindung steht.

Jedes der Mobilfunknetze ("Core Network") enthält eine Anzahl von Dienst-Servern, die jeweilige Dienste verschiedener Art zur Nutzung durch das Kommunikationsendgerät bereit halten.

Im vorgestellten Ausführungsbeispiel stellt das Mobilfunknetz M1 einen Sportinformationsdienst, einen Wettervorhersage-Dienst und einen Sprachdienst zur Verfügung. Dieselben Dienste werden auch innerhalb des Mobilfunknetzes M2 angeboten.

Bei einer Anmeldung des Kommunikationsendgerätes K sowohl in dem Mobilfunknetz M1 als auch in dem Mobilfunknetz M2 signalisieren diese Mobilfunknetze über ihre jeweiligen Basisstationen B1, B2 die jeweils von ihnen bereitgestellten Dienste, nämlich die drei oben aufgelisteten.

Diese Signalisierung erfolgt mit Hilfe von Datensätzen, die bei den beiden Mobilfunknetzen M1 und M2 einheitlich sind und eine jeweilige Dienstart bezeichnen. Im vorliegenden Ausführungsbeispiel sind insgesamt drei Dienstarten vorgesehen, die jeweils von beiden Mobilfunknetzen M1, M2 angeboten werden. Beim Anmelden des Kommunikationsendgerätes K bei den beiden Mobilfunknetzen M1, M2 werden daher jeweils drei Datensätze an das Kommunikationsendgerät K übermittelt, welche wiedergeben, dass das erste Mobilfunknetz M1 die drei Dienste Sportinformationsdienst, Wettervorhersage-Dienst und Sprachdienst anbietet, während dieselben Dienste auch von dem zweiten Mobilfunknetz M2 zur Verfügung gestellt werden. Die übertragenen Datensätze enthalten Informationen, wie beispielsweise Versionsnummern und/oder Preise, der durch sie wiedergegebenen Dienste.

Das die Datensätze empfangende Kommunikationsendgerät K weist eine Dienst-Datensatz-Erfassungseinrichtung 1 auf, die mit einer Luftschnittstelle des Kommunikationsendgerätes K in Verbindung steht und so die Dienst-Datensätze erfasst. Das Kommunikationsendgerät K weist außerdem insgesamt drei Speicher 2A, 2B, 2C auf, die jeweils einer Dienstart zugeordnet sind. Eine solche Zuordnung kann beispielsweise durch den Benutzer vorgenommen sein.

Der Speicher 2A ist für Sportinformationsdienste vorgesehen und enthält daher Dienste und deren Verbindungsdaten (IP-Adressen), die von einem der Mobilfunknetze M1 und M2 mit dem Datensatz für Sportinformationsdienste dem Kommunikationsendgerät K signalisiert worden sind. Entsprechendes gilt für die Speicher 2B, 2C für die weiteren Dienste Wettervorhersage-Dienst und Sprachdienst.

Außerdem weist das Kommunikationsendgerät K eine Anzeigeeinrichtung 3 auf, die mit sämtlichen Speichern 2A, 2B, 2C in Verbindung bringbar ist. Dabei kann ein Benutzer des Kommunikationsendgerätes K durch Betätigung einer zugehörigen Eingabetaste einer Eingabeeinrichtung 4 den Inhalt einer gewünschten Liste aufrufen. Die Eingabeeinrichtung 4 gestattet es dem Benutzer außerdem, eine Priorisierung innerhalb einer der in den Speichern 2A, 2B, 2C vorhandenen Listen vorzunehmen, so dass an einem jeweiligen Kopfende einer der Listen jeweils die Daten desjenigen Dienstes angezeigt werden, der sich durch eine optimale Erfüllung eines Bewertungskriteriums, das der Benutzer festgelegt hat, auszeichnet, während die weiteren Listeneinträge nur dann zum Tragen kommen sollen, wenn der erste Listeneintrag nicht zur Verfügung steht.

In dem Fall, wenn der Benutzer einen Wettervorhersage-Dienst in Anspruch nehmen will, wählt er mit Hilfe der als Auswahlmittel dienenden Eingabeeinrichtung 4 den zugehörigen Speicher 2B an, dessen Inhalt dann auf der Anzeigeeinrichtung 3 dargestellt wird. Aufgrund der Darstellung kann dann der gewünschte Dienst der Art "Wettervorhersage-Dienst" aus der Liste ausgewählt werden. Alternativ ist es auch möglich, dass aufgrund allein der Auswahl der Dienstart "Wettervorhersage-Dienst" der an erster Stelle in der Liste des Speichers 2B befindliche Dienst automatisch über die Luftschnittstelle des Kommunikationsendgerätes K angewählt wird.

## Patentansprüche

1. Mobiles Kommunikationsendgerät (K) zum Betrieb für mindestens zwei Mobilfunk-Kommunikationssysteme in jeweils zugehörigen Mobilfunknetzen (M1, M2), deren jedes für einen Benutzer des Kommunikationsendgerätes eine Anzahl Dienste verschiedener Art bereitstellt,
**dadurch gekennzeichnet, dass**
das Kommunikationsendgerät (K) zum Empfangen und Weiterverarbeiten von Datensätzen ausgebildet ist, die jeweils einer Art der Dienste zugeordnet und die für die mindestens zwei Mobilfunk-Kommunikationssysteme einheitlich sind und das Kommunikationsendgerät derart ausgebildet ist, dass von den Mobilfunknetzen (M1, M2) mehrmals bereitgestellte Dienste derselben Art jeweils anhand der Datensätze in dem Kommunikationsendgerät (K) in Form einer Dienstart-Liste gespeichert werden, wobei die Datensätze Informationen enthalten, die eine Bewertung der zugehörigen Dienste durch einen Benutzer gestatten.

2. Kommunikationsendgerät nach Anspruch 1,
**dadurch gekennzeichnet, dass**
Einträge in der Dienstart-Liste untereinander eine unterschiedliche Priorität aufweisen.

3. Kommunikationsendgerät nach Anspruch 2,
**dadurch gekennzeichnet, dass**
für die Priorität ein Bewertungskriterium definiert ist.

4. Kommunikationsendgerät nach Anspruch 3,
**dadurch gekennzeichnet, dass**
das Bewertungskriterium benutzerdefiniert ist.

5. Kommunikationsendgerät nach einem der Ansprüche 1 bis 4,
**dadurch gekennzeichnet, dass**
es derart ausgebildet ist, dass die Liste auf einer Anzeigeeinrichtung (3) des Kommunikationsendgerätes (K) darstellbar ist und Auswahlmittel (4) vorgesehen sind zur Auswahl eines Dienstes einer gewünschten Dienstart aus der Liste.

6. Mobilfunk-Anordnung mit mindestens zwei Mobilfunknetzen, (M1, M2) denen jeweils ein Mobilfunk-Kommunikationsstandard zugeordnet ist, und mit mindestens einem mobilen Kommunikationsendgerät (K), das zum Betrieb für die mindestens zwei Mobilfunknetze ausgebildet ist, wobei jedes Mobilfunknetz (M1, M2) für einen Benutzer des Kommunikationsendgerätes (K) eine Anzahl Dienste verschiedener Art bereit stellt,
**dadurch gekennzeichnet, dass**
die mindestens zwei Mobilfunknetze (M1, M2) zum Aussenden von Datensätzen ausgebildet sind, die jeweils einer Art der Dienste zugeordnet, für die mindestens zwei Mobilfunknetze einheitlich sind und Informationen enthalten, die eine Bewertung der zugehörigen Dienste durch einen Benutzer gestatten, und
das Kommunikationsendgerät (K) zum Empfangen und Weiterverarbeiten der Datensätze ausgebildet ist.

## Claims

1. Mobile communication terminal (K) for operation for at least two mobile radio communication systems in respectively associated mobile radio networks (M1, M2), each of which provides a user of the communication terminal with a number of services of different type,
**characterized in that**
the communication terminal (K) is designed to receive and effect further processing of data records which are associated with one respective type of the services and which are consistent for the at least two mobile radio communication systems, and
the communication terminal is designed such that services of the same type which are repeatedly provided by the mobile radio networks (M1, M2) are respectively stored using the data records in the communication terminal (K) in the form of a list of service types, the data records containing information which allows the associated services to be assessed by a user.

2. Communication terminal according to Claim 1,
**characterized in that**
entries in the list of service types have different priority among each other.

3. Communication terminal according to Claim 2,
**characterized in that**
an assessment criterion is defined for the priority.

4. Communication terminal according to Claim 3,
**characterized in that**
the assessment criterion is user-defined.

5. Communication terminal according to one of Claims 1 to 4,
**characterized in that**
it is designed such that the list can be shown on a display device (3) on the communication terminal (K), and selection means (4) are provided for selecting a service of a desired service type from the list.

6. Mobile radio arrangement having at least two mobile radio networks (M1, M2), each of which has an associated mobile radio communication standard, and having at least one mobile communication terminal (K) which is designed for operation for the at least two mobile radio networks, with each mobile radio network (M1, M2) providing a user of the communication terminal (K) with a number of services of different type,
**characterized in that**
the at least two mobile radio networks (M1, M2) are designed for transmitting data records which are associated with one respective type of the services, for which at least two mobile radio networks are consistent, and which contain information which allows the associated services to be assessed by a user, and
the communication terminal (K) is designed to receive and effect further processing of the data records.

## Revendications

1. Terminal de communication mobile (K) pour l'exploitation d'au moins deux systèmes de communication de téléphonie mobile dans des réseaux de téléphonie mobile (M1, M2) respectivement correspondantes, dont chacun met à disposition un certain nombre de services de nature différente pour un utilisateur du terminal de communication,
**caractérisé en ce que**
le terminal de communication (K) est conçu pour recevoir et retraiter des ensembles de données, qui sont attribués à chaque fois à un type des services et sont homogènes pour les au moins deux systèmes de communication de téléphonie mobile et
le terminal de communication est conçu de telle sorte que des services mis à disposition plusieurs fois par les réseaux de téléphonie mobile (M1, M2), du même type, sont enregistrés à chaque fois dans des ensembles de données dans le terminal de communication (K) sous la forme d'une liste de type de service, les ensembles de données contenant des informations qui permettent une évaluation des services correspondants par un utilisateur.

2. Terminal de communication selon la revendication 1,
**caractérisé en ce que**
des enregistrements dans la liste de type de service présentent une priorité différente les unes par rapport aux autres.

3. Terminal de communication selon la revendication 2,
**caractérisé en ce que**
un critère d'évaluation est défini pour la priorité.

4. Terminal de communication selon la revendication 3,
**caractérisé en ce que**
le critère d'évaluation est défini par l'utilisateur.

5. Terminal de communication selon l'une quelconque des revendications 1 à 4,
**caractérisé en ce que**
ledit terminal est conçu pour que la liste puisse être présentée sur un dispositif d'affichage (3) du terminal de communication (K) et des moyens de sélection (4) sont prévus pour la sélection d'un service d'un type de service souhaité dans la liste.

6. Agencement de téléphonie mobile comprenant au moins deux réseaux de téléphonie mobile (M1, M2), à chacun desquels un standard de communication de téléphonie mobile est attribué, et au moins un terminal de communication (K) mobile, qui est conçu pour l'exploitation pour les au moins deux réseaux de téléphonie mobile, chaque réseau de téléphonie mobile (M1, M2) mettant à disposition un certain nombre de services de type différent pour un utilisateur du terminal de communication (K),
**caractérisé en ce que**
les au moins deux réseaux de téléphonie mobile (M1, M2) sont conçus pour l'émission d'ensembles de données qui sont attribués respectivement à un type de services pour lequel au moins deux réseaux de téléphonie mobile sont homogènes et contiennent des informations qui permettent une évaluation des services spécifiques par un utilisateur, et
le terminal de communication (K) est conçu pour la réception et le retraitement des ensembles de données.
